# EUROPÄISCHE PATENTANMELDUNG

(11) **EP 1 276 052 A2**
(43) Veröffentlichungstag der Anmeldung: **15.01.2003**
(21) Anmeldenummer: 02015267.4
(22) Anmeldetag: 09.07.2002
(51) Int. Cl.: G06F 13/368

(54) **Verfahren und Vorrichtung zur Zuteilung eines PCI-Busses an mehrere Master zum Zugriff der Master auf Targets über den PCI-Bus**

(30) Priorität: 10.07.2001 DE 10133460
(71) Anmelder: SIEMENS AKTIENGESELLSCHAFT, 80333 München (DE)
(72) Erfinder: Runte, Markus, 91126 Schwabach (DE)

(57) **Zusammenfassung**

Die Erfindung betrifft ein Verfahren und eine Vorrichtung zur Zuteilung eines PCI-Busses an mehrere Master für Zugriffe der Master über den PCI-Bus auf an den PCI-Bus angeschlossene Targets, wobei die Master über den PCI-Bus Lese- und Schreibaktionen auf die Targets durchführen. Das erfindungsgemäße Verfahren umfasst ein Standard-Arbitrierverfahren und ein Spezial-Arbitrierverfahren. In dem Standard-Arbitrierverfahren wird die Zuteilungsreihenfolge für eine Zuteilung des PCI-Busses entsprechend der jeweils für einen Master vorbestimmten Zuteilungspriorität festgelegt. Das Spezial-Arbitrierverfahren ersetzt das Standard-Arbitrierverfahren dann, wenn ein deterministischer Master, der einen Request auf Zuteilung des PCI-Busses gestellt hat, bis zum Ablauf einer vorbestimmten Zeitspanne den PCI-Bus nicht zugeteilt bekommen hat oder falls innerhalb des Zeitraums kein Datenaustausch zwischen dem deterministischen Master und dem adressierten Target erfolgte. In dem Spezial-Arbitrierverfahren wird dafür Sorge getragen, dass dieser deterministische Master in der Zuteilungsreihenfolge mit einer größeren Häufigkeit auftritt als im Standard-Arbitrierverfahren.

## Beschreibung

### Technisches Gebiet

Die Erfindung betrifft ein Verfahren und eine Vorrichtung zur Zuteilung eines PCI-Busses an mehrere Master für Zugriffe der Master über einen PCI-Bus auf an den PCI-Bus angeschlossene Targets, wobei die Master über den PCI-Bus Lese- und Schreibaktionen auf die Targets durchführen.

In PCI-Bus basierenden Rechnerarchitekturen spielt ein hoher Datensatz eine immer wichtigere Rolle. Deshalb werden neuere PCI-Master- und Slave- bzw. Targetanschlüsse zunehmend mit FIFO-Speicherstrukturen in Lese- und Schreibrichtung ausgerüstet. Dadurch soll erreicht werden, dass keine Wartezyklen bei Zugriffen über den PCI-Bus entstehen. Typischerweise gibt es mehrere Master im System, die mit verschiedenen Strategien um den PCI-Bus arbitrieren.

Wenn mehrere Master gleichzeitig um den PCI-Bus arbitrieren, d. h. einen Zugriff hierauf benötigen, um mit einem Target zu kommunizieren, kann es passieren, dass ein und derselbe Master beim Zugriff auf ein bestimmtes Target von diesem immer wieder zurückgewiesen wird, weil das Target gerade einen PCI-Auftrag eines anderen Masters bearbeitet und keinen weiteren Auftrag annehmen kann. In diesem Fall ist die Ressource (z. B. ein Register oder ein FIFO-Speicher), die einen Auftrag im Target entgegennehmen kann, durch eine vorhergehende Aktion noch belegt. Im Extremfall gelingt es nicht allen Mastern, Zugriffe auf dieses Target erfolgreich zu initiieren, da sie immer wieder zurückgewiesen werden.

Bei speicherprogrammierbaren Steuerungen (SPS-Systeme) erfolgt zunehmend ein Einsatz von PCI-Bussystemen. Speziell in diesem Anwendungsfall ist aber die Deterministik der Zugriffe (bzw. Lese- und Schreibaktionen) sehr wichtig. Ein Zugriff auf ein bestimmtes Target muss damit innerhalb einer vorherbestimmbaren, endlichen Zeit abgewickelt werden können.

### Stand der Technik

Bisher mussten aus den oben genannten Gründen beim Einsatz von PCI-Bussen hinsichtlich der Deterministik Abstriche gemacht werden. Das bedeutete, dass bei den bisherigen Verfahren zur Kommunikation über einen PCI-Bus es unter Umständen nicht immer einwandfrei vorherzusehen war, wann und ob ein bestimmter Master Zugriff über den PCI-Bus auf ein Target erhält. Aufgrund dessen kam es teilweise zu Kommunikationsproblemen.

Es ist hier noch zu erwähnen, dass ein Master insbesondere ein PCI-Busteilnehmer ist, der über den PCI-Bus mit so genannten Slaves bzw. Targets kommuniziert. Die Kommunikation umfasst sowohl Schreib- als auch Lesezugriffe auf die Targets, die dafür üblicherweise mit einem Speicher (z. B. FIFO) ausgerüstet sind. Falls ein Master auf einen anderen Master über den PCI-Bus zugreift, ist dieser zweite Master als Target anzusehen.

### Darstellung der Erfindung

Das der Erfindung zugrunde liegende technische Problem besteht darin, eine Verfahrensweise und eine Vorrichtung bereitzustellen, bei denen die Kommunikation über einen PCI-Bus hinsichtlich der Deterministik verbessert ist.

Dieses technische Problem wird durch ein Verfahren mit den Merkmalen des Anspruchs 1 und eine Vorrichtung mit den Merkmalen des Anspruchs 7 gelöst. So umfasst ein erfindungsgemäßes Verfahren zur Zuteilung eines PCI-Busses an mehrere Master für Zugriffe der Master auf Targets über den PCI-Bus ein Standard-Arbitrierverfahren und ein Spezial-Arbitrierverfahren. Im Standard-Arbitrierverfahren wird die Zuteilungsreihenfolge für eine Zuteilung des PCI-Busses entsprechend der jeweiligen einem Master zugewiesenen Zuteilungspriorität festgelegt. Ein Master mit einer hohen Priorität ist demzufolge öfter in der Zuteilungsreihenfolge aufgeführt als ein Master, dem eine niedrigere Zuteilungspriorität zugewiesen ist. Das Spezial-Arbitrierverfahren wird dann durchgeführt, wenn ein deterministischer Master, der einen Request für die Zuteilung des PCI-Busses gestellt hat, bis zum Ablauf einer vorbestimmten Zeitspanne den PCI-Bus nicht zugeteilt bekommen hat oder wenn kein Datenaustausch zu dem adressierten Target stattgefunden hat. In dem Spezial-Arbitrierverfahren wird dafür Sorge getragen, dass der deterministische Master in der Zuteilungsreihenfolge mit einer größeren Häufigkeit auftritt als im Standard-Arbitrierverfahren. Im Spezial-Arbitrierverfahren wird dafür gemäß einer vorteilhaften Ausführungsform der Erfindung dem deterministischen Master die höchste zur Verfügung stehende Priorität für eine Zuteilung des PCI-Busses zugewiesen und die anderen Master, sofern sie keine Aktion auf das vom deterministischen Master adressierte Target ausstehen haben, die eine so genannte Deadlock-Situation erzeugen kann, werden aus der bisherigen Zuteilungsreihenfolge entfernt.

Unter deterministischer Master ist hier insbesondere ein Master zu verstehen, für den ein Datentransfer über den PCI-Bus innerhalb einer bestimmten Zeit mit größtmöglicher Wahrscheinlichkeit sicherzustellen ist, d. h. ein Master mit hoher Deterministik. Mit anderen Worten, der deterministische Master darf nicht über einen festgelegten Zeitraum hinaus unter bestimmten Bedingungen an einem Zugriff auf den PCI-Bus zur Durchführung von Schreib- und/oder Lesezugriffen gehindert sein.

Der Erfindung liegt der Gedanke zugrunde, die Zuteilung eines PCI-Busses an mehrere Master grundsätzlich gemäß einem Standard-Arbitrierverfahren durchzuführen, in dem eine vorgebbare Zuteilungsreihenfolge für die einzelnen Master gemäß den vorhersehbaren Anforderungen der einzelnen Master erstellt wird und anhand dieser Zuteilungsreihenfolge die Vergabe des PCI-Busses erfolgt. Das Standard-Arbitrierverfahren wird allerdings ständig dahingehend überwacht, ob ein deterministischer Master, der einen Request für eine Zuteilung des PCI-Busses gestellt hat, auch tatsächlich nicht daran gehindert wird, den PCI-Bus zugeteilt zu bekommen, oder, falls er den PCI-Bus zugeteilt bekommen hat, daran gehindert ist, einen Datenaustausch mit dem adressierten Target durchzuführen. Dazu wird erstmals erfindungsgemäß überprüft, ob bis zum Ablauf einer vorbestimmten Zeitspanne ein solcher deterministischer Master einen Zugriff über den PCI-Bus erhalten und ein Datenaustausch stattgefunden hat. Falls dies nicht der Fall sein sollte, so wird vom Standard-Arbitrierverfahren abgewichen und in dem dann durchgeführten Spezial-Arbitrierverfahren dafür gesorgt, dass der deterministische Master in der Zuteilungsreihenfolge mit einer größeren Häufigkeit auftritt als im Standard-Arbitrierverfahren. Dadurch wird gewährleistet, dass ein deterministischer Master in kalkulierbaren, garantierten Zeiträumen über den PCI-Bus auf Targets zugreifen kann.

Es sei hier noch angemerkt, dass in das erfindungsgemäße Arbitrierverfahren nur Master integriert sind, die einen Request auf Zuteilung des PCI-Busses gestellt haben. Wenn kein Master einen Request gestellt hat, so wird dem voreingestellten Master (Default Busowner) der PCI-Bus zugewiesen. Die volle "Arbitrierleistung" ist nur für den relativ seltenen Fall notwendig, wenn ein großer Teil oder alle Master gleichzeitig den Bus zugeteilt bekommen wollen.

Insbesondere ist gemäß einer vorteilhaften Ausführungsform die größere Häufigkeit in der Zuteilungsreihenfolge des deterministischen Masters dann gegeben, wenn diesem die höchste zur Verfügung stehende Priorität zugewiesen wird und diejenigen Master aus der Zuteilungsreihenfolge entfernt werden, die keine Aktion auf das vom deterministischen Master adressierte Target ausstehen haben, die eine so genannte Deadlock-Situation erzeugen kann. Dadurch wird automatisch dafür gesorgt, dass nach und nach in der gewünschten Zeitspanne nur noch der deterministische Master in der Zuteilungsreihenfolge aufgelistet sein wird, wodurch sichergestellt ist, dass diesem deterministischen Master der PCI-Bus zugeteilt wird und ein Datenaustausch mit oder zu dem adressierten Target erfolgt.

Bei einer vorteilhaften Ausführungsform des erfindungsgemäßen Verfahrens ist die vorbestimmte Zeitspanne, deren Überprüfung das Entscheidungskriterium zum Start des Spezial-Arbitrierverfahrens darstellt, veränderbar, je nach den an den PCI-Bus angeschlossenen Mastern und Targets oder anderen Umgebungsbedingungen. Hierdurch ist eine optimale Anpassung an die jeweiligen Bedingungen möglich.

Vorzugsweise wird zur Ermittlung der vorbestimmten Zeitspanne eine vorbestimmte Anzahl von PCI-Bustakten gezählt. Damit ist es möglich, die Zeitspanne, in der der deterministische Master Zugriff auf den PCI-Bus erhalten soll, in einfacher Weise zu messen, da auf bereits bestehende Takte, nämlich die des PCI-Busses, zurückgegriffen werden kann.

Eine vorteilhafte Ausführungsform des erfindungsgemäßen Verfahrens sieht vor, dass für diejenigen Master die Zuteilungsreihenfolge vorgegeben wird, denen die gleiche Zuteilungspriorität zugewiesen wurde. Damit wird sichergestellt, dass auch Master mit gleichen Zuteilungsprioritäten definiert in der Zuteilungsreihenfolge aufgelistet werden. Durch das Vorsehen von gleichen Zuteilungsprioritäten für mehrere Master ist es zudem möglich, Gruppen von Mastern mit Zuteilungsprioritäten zu bilden, wodurch einer Gruppe von Mastern mit gleicher Zuteilungspriorität eine bestimmte Häufigkeit in der Zuteilungsreihenfolge zugewiesen werden kann. Dies ist insbesondere vorteilhaft, wenn sicherzustellen ist, dass bestimmte Master weitaus häufiger Zugriff auf den PCI-Bus erhalten sollen als andere Master. In einem tatsächlichen Anwendungsfall ist beispielsweise ein SPS-Sprachprozessor mit hoher Deterministik ein solcher Master, der weitaus häufiger Zugriff auf den PCI-Bus benötigt als andere Master. Master, die eine niedrigere Priorität benötigen, sind beispielsweise Master, die dem Kommunikationsteil einer SPS-Zentralbaugruppe zuzurechnen sind. Insbesondere ist hier beispielsweise ein TC11IB Master (hergestellt und vertrieben von der Infineon Technologies AG, Deutschland) zu nennen.

Alternativ zu der vorgenannten Ausführungsform ist es auch möglich, die jeweilige vorbestimmte Zuteilungspriorität eines Masters so festzulegen, dass der entsprechende Master in der Zuteilungsreihenfolge in einer vorbestimmten Anzahl pro PCI-Bustakten auftritt.

Eine erfindungsgemäße Vorrichtung zur Zuteilung eines PCI-Busses für Zugriffe von mehreren Mastern auf an den PCI-Bus angeschlossene Targets umfasst eine Einrichtung zur Festlegung der Zuteilungsreihenfolge für eine Zuteilung des PCI-Busses entsprechend einer jeweils einem Master zugeordneten Zuteilungspriorität. Ferner ist eine Zeitermittlungseinrichtung vorhanden, mit der der Ablauf einer vorbestimmten Zeitspanne ermittelbar ist. Die Ausgabe eines Zeitablaufsignals erfolgt mittels einer Ausgabeeinrichtung. Das Zeitablaufsignal wird von der Ausgabeeinrichtung dann abgegeben, wenn ein deterministischer Master bis zum Ablauf der in der Zeitermittlungseinrichtung ermittelten Zeitspanne den PCI-Bus nicht zugeteilt bekommen hat oder kein Datenaustausch über den PCI-Bus zwischen dem deterministischen Master und dem adressierten Target stattgefunden hat. Mittels einer Änderungseinrichtung wird dafür Sorge getragen, dass der deterministische Master in der Zuteilungsreihenfolge mit einer größeren Häufigkeit auftritt, als durch die Einrichtung zur Festlegung der Zuteilungsreihenfolge auf den PCI-Bus festgelegt.

Vorzugsweise ist die Änderungseinrichtung so ausgebildet, dass sie dem deterministischen Master nach Erhalt des Zeitablaufsignals die höchste Priorität für einen Zugriff auf den PCI-Bus zuweist und diejenigen Master, die keine Aktion auf das vom deterministischen Master adressierte Target ausstehen haben, die eine so genannte Deadlock-Situation erzeugen kann, aus der Zuteilungsreihenfolge entfernt. Durch diese Maßnahme ist auf eine endliche, vorbestimmbare Zeitspanne sichergestellt, dass der deterministische Master immer häufiger in der Zuteilungsreihenfolge auftaucht, schließlich der einzige ist, der in der Zuteilungsreihenfolge vorhanden sein wird.

In einer bevorzugten Ausführungsform ist vorgesehen, dass die vorbestimmte Zeitspanne der Zeitermittlungseinrichtung von einem Bediener eingebbar bzw. vorgebbar ist. Damit ist auf einfache Weise eine Anpassung an die jeweiligen Umgebungsbedingungen möglich.

Gemäß den obigen Ausführungen ist es vorteilhaft, dass die Zeitermittlungseinrichtung eine Zähleinrichtung umfasst, die zur Ermittlung der vorbestimmten Zeitspanne eine vorbestimmte Anzahl von PCI-Bustakten zählt. Dies gilt insbesondere deshalb, weil auch andere Zeitermittlungseinrichtungen am PCI-Bus mit diesem Takt arbeiten.

Vorzugsweise ist die Einrichtung zur Festlegung der Zuteilungsreihenfolge so ausgebildet, dass die Reihenfolge von Mastern vorgebbar ist, denen die gleiche Zuteilungspriorität zugewiesen ist.

Eine weitere vorteilhafte Ausführungsform einer erfindungsgemäßen Vorrichtung sieht vor, dass durch die jeweilige vorbestimmte Zuteilungspriorität eines Masters festlegbar ist, wie oft der entsprechende Master in der Zuteilungsreihenfolge auftaucht.

Eine bevorzugte Ausführungsform einer erfindungsgemäßen Vorrichtung sieht vor, dass die Vorrichtung insgesamt an- und abschaltbar ist. Dadurch ist es möglich, je nach Umgebungsbedingungen in gewünschter Weise die Deterministik zu erhöhen oder im bisherigen Verfahren nach dem Stand der Technik die Rechnerarchitektur zu betreiben. Diese An- und Abschaltbarkeit ist aber auch vorteilhaft, wenn eine externe erfindungsgemäße Vorrichtung zuschaltbar sein soll und, wie in einer bevorzugten Ausführungsform, nicht in einem Sprachprozessor realisiert ist.

### Kurze Beschreibung der Zeichnungen

Im Folgenden sind zur weiteren Erläuterung und zum besseren Verständnis mehrere Ausführungsformen der Erfindung unter Bezugnahme auf die beigefügten Zeichnungen näher beschrieben.
Es zeigen:
- Fig. 1: ein prinzipielles Flussdiagramm einer Ausführungsform des erfindungsgemäßen Verfahrens,
- Fig. 2: ein schematisiertes Blockschaltbild einer erfindungsgemäßen Vorrichtung,
- Fig. 3: ein Prinzipschaubild von Gruppen von Mastern mit gleicher Zuteilungspriorität und eine sich daraus ergebende Zuteilungsreihenfolgetabelle,
- Fig. 4: eine weitere Zuteilungsreihenfolgetabelle bei sich verändernder Anzahl von Mastern in der Ebene 2,
- Fig. 5: eine weitere Zuteilungsreihenfolgetabelle nach Entfernen der Master der Ebene 2 und
- Fig. 6: ein schematisiertes Blockschaltbild eines Masterund Targetinterfaces für einen PCI-Bus.

### Beschreibung von Ausführungsformen der Erfindung

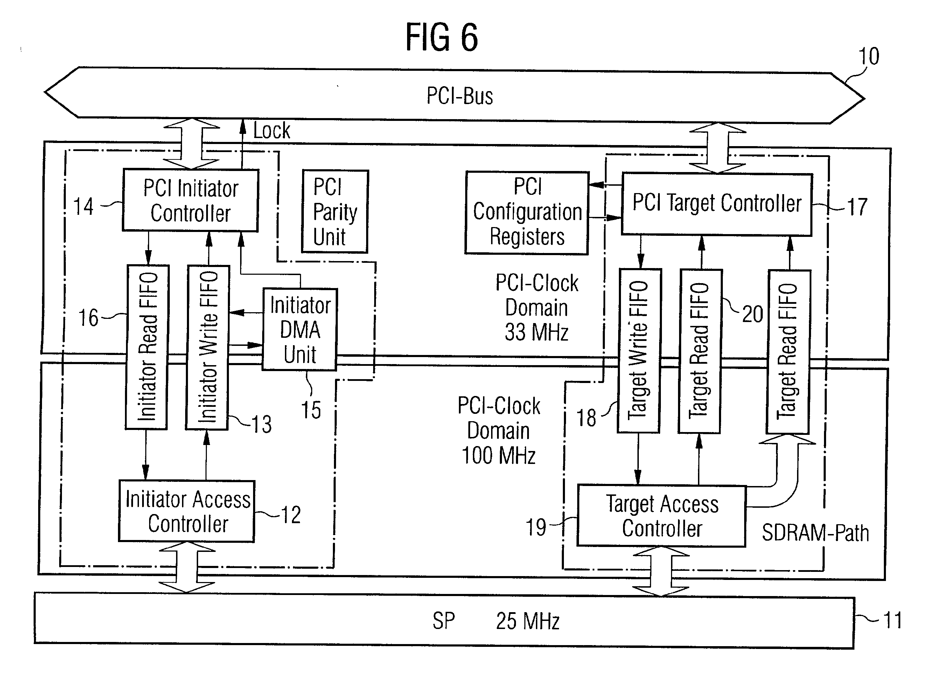

Zum besseren Verständnis wird eingangs unter Bezugnahme auf die Fig. 6 der prinzipielle Aufbau eines Master- und Targetinterfaces für einen PCI-Bus 10 erläutert. Bei der hier dargestellten Ausführungsform ist ein SPS-Sprachprozessor 11 (abgekürzt SP) mit hoher Deterministik über ein Interface an den PCI-Bus 10 angeschlossen.

Zunächst sei die Masterfunktionalität beschrieben: Der SP 11 startet einen Zugriff auf den PCI-Bus 10, indem er ein Kommandowort, das auch die Adresse der Transaktion beinhaltet, über den Initiator Access Controller (IAC) 12 in das Initiator Write FIFO 13 einträgt. Dieses Kommandowort enthält auch die Information über die Menge der zu übertragenden Daten. Bei einer Schreibtransaktion wird der SP 11 die Daten durch einen oder mehrere weitere Einträge im Initiator Write FIFO 13 hinterlegen. Der PCI-Initiator Controller 14 erzeugt nun, wenn er den PCI-Bus 10 zugeteilt bekommen hat, aus den Informationen des Kommandowortes einen Lese- oder Schreibzugriff. Bei der Übertragung von mehreren Datenworten innerhalb eines Zugriffs (man spricht von einem Burstzugriff) wird die Protokollsteuerung von der Initiator DMA Einheit 15 übernommen. Bei Lesezugriffen werden die von einem PCI-Target gelesenen Daten vom PCI-Initiator Controller 14 in das Initiator Read FIFO 16 eingetragen. Über den IAC 12 kann der SP diese Daten nun abholen.

### Funktionalität des Target:

Das Target reagiert auf Speicherzugriffe und Konfigurationszugriffe vom PCI-Bus 10. Die Konfigurations-, Lese- und Schreibzugriffe adressieren nur die Konfigurationsregister im PCI-Interface. Die Speicherzugriffe werden, wenn das Target adressiert wird, an den SP 11 übergeben. Dazu wird von einem PCI-Target Controller 17 ein Kommandowort gebildet und in das Target Write FIFO 18 eingetragen. Wenn kein Platz mehr in diesem FIFO 18 vorhanden ist, wird der PCI-Target Controller 17 per Busprotokoll den Master informieren, dass seine Ressourcen belegt sind, und ihn bitten, es später wieder zu versuchen. Nachdem ein Kommandowort erfolgreich im Target Write FIFO 18 eingetragen ist, werden bei Schreibzugriffen die Daten ebenfalls vom PCI-Target Controller 17 in das Target Write FIFO 18 geschrieben. Dies funktioniert so lange, bis entweder das FIFO 18 vollständig gefüllt ist oder alle Daten übertragen sind. Wenn kein Platz mehr im FIFO 18 vorhanden ist, wird der PCI-Target Controller 17 per Busprotokoll den Master informieren, dass seine Ressourcen belegt sind, und ihn bitten, es später wieder zu versuchen. Bei Lesezugriffen werden die vom SP 11 gelesenen Daten über den Target Access Controller 19 in das Target Read FIFO 20 eingetragen. Der PCI-Master, der den Lesezugriff angestoßen hat, wird in der Regel zunächst per Busprotokoll aufgefordert, die Daten später abzuholen, da dies etwas Zeit in Anspruch nimmt. In diesem Fall spricht man von verzögertem Lesezugriff. Versucht er es später und sind die Daten vom SP 11 inzwischen im Target Read FIFO 20 eingetroffen, werden sie vom PCI-Target Controller 17 auf den PCI-Bus 10 gelegt. Wenn das FIFO 20 leer ist, wird der Master per Busprotokoll aufgefordert, es später erneut zu versuchen. Sobald aber ein völlig anderer Buszugriff vom Target Access Controller 19 bearbeitet wird, wird das Target Read FIFO 20 gelöscht.

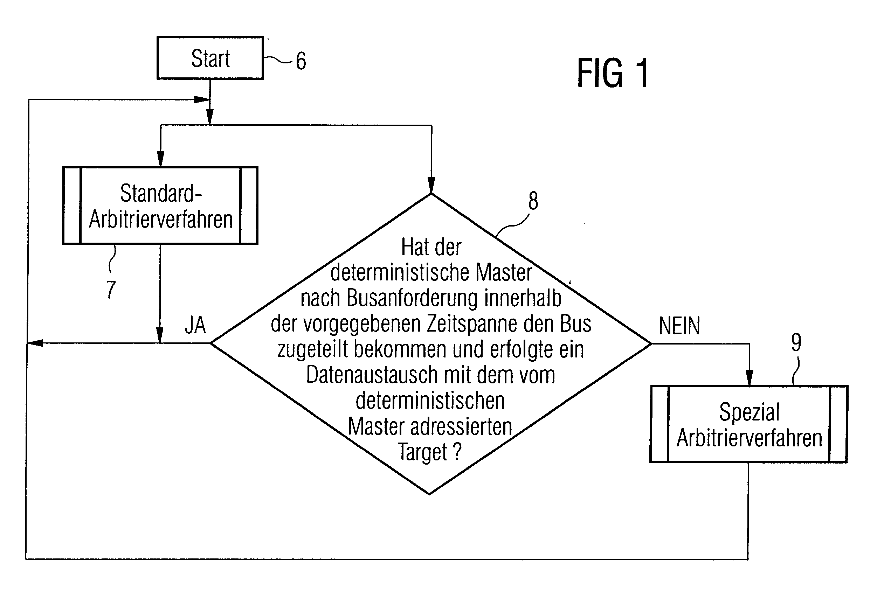

Wie sich aus der Fig. 1 ergibt, beginnt das erfindungsgemäße Verfahren mit dem Schritt 6. Es wird ein Standard-Arbitrierverfahren 7 und gleichzeitig eine Zeituhr gestartet. Ist eine vorbestimmte Zeitspanne abgelaufen, so wird im Schritt 8 abgefragt, ob zu diesem Zeitpunkt der deterministische Master Zugriff auf den PCI-Bus erhalten hat. Falls dies bejaht wird, wird weiter im Standard-Arbitrierverfahren 7 fortgefahren. Ist nach Ablauf der vorgegebenen Zeitspanne kein Zugriff des deterministischen Masters mit realem Datenaustausch über den PCI-Bus erfolgt, so wird mit dem Spezial-Arbitrierverfahren 9 fortgefahren und das Standard-Arbitrierverfahren 7 gestoppt.

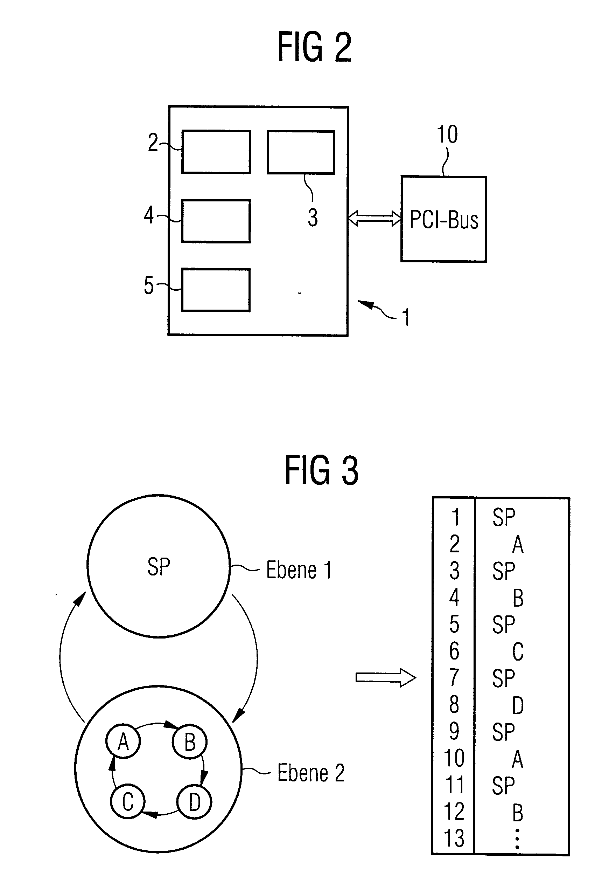

Für die weitere Erläuterung wird nun angenommen, dass gemäß der Fig. 6 der Master SP 11 die Priorität 1 zugewiesen bekommt und die Master A, B, C, D, die als Gruppe in der Ebene 2 zusammengefasst sind, ebenfalls die Priorität 1 zugewiesen bekommen haben, die interne Reihenfolge in der Ebene 2 aber A B C D ist. Die gleiche Priorität für die Ebene 1 und die Ebene 2 bedeutet, dass die Ebene 1 und die Ebene 2 abwechselnd den PCI-Bus 10 zugeteilt bekommen, wodurch sich die in der Fig. 3 gezeigte Zuteilungsreihenfolge ergibt. Aufgrund dieser Aufteilung hat der Master 11 der Ebene 1 bereits eine sehr hohe Häufigkeit bei der Buszuteilung gegenüber den Mastern A, B, C oder D der Ebene 2.

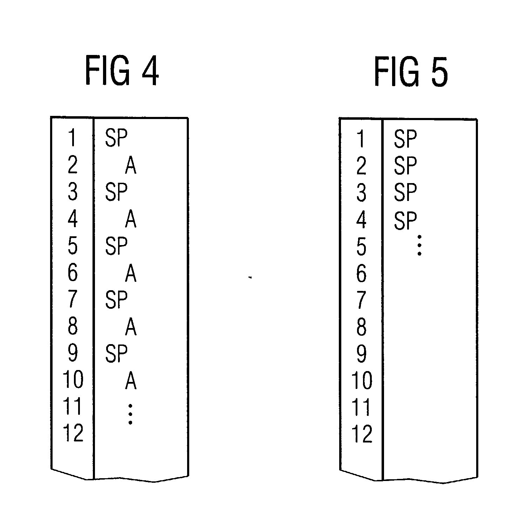

Wie bereits zuvor ausgeführt, kommt das Spezial-Arbitrierverfahren 9 dann zur Anwendung, wenn die vorgegebene Zeitspanne abgelaufen ist und der deterministische Master 11, hier der SP, den PCI-Bus 10 nicht zugeteilt erhalten hat oder mit dem adressierten Target kein Datenaustausch stattgefunden hat, d. h. vom Target mit Retry zurückgewiesen wurde. Im modifizierten Arbitrierverfahren, also dem Spezial-Arbitrierverfahren 9, wird nun dafür gesorgt, dass in der Ebene 2 nur noch die Master verbleiben, die eine Aktion auf das vom deterministischen Master adressierte Target ausstehen haben, die eine so genannte Deadlock-Situation erzeugen kann. Alle anderen Master werden ausgeschlossen. Damit ändert sich die Zuteilungsreihenfolge in der Weise, wie es in Fig. 4 dargestellt ist. Hier sind die Master B, C und D aus der Zugriffsreihe ausgeschlossen worden, da sie keine Aktion auf das vom deterministischen Master adressierte Target ausstehen haben, die eine so genannte Deadlock-Situation erzeugen kann. Eine derartige Aktion ist bei diesem Beispiel nur noch für den Master A ausstehend. Nachdem auch der Master A erfolgreich die Deadlock-Situation aufgelöst hat, wird dieser ebenfalls im Spezial-Arbitrierverfahren 9 aus der Zuteilungsreihenfolge entfernt, wodurch sich in der Zuteilungsreihenfolge ergibt, dass nur noch der Master 11 in der Zuteilungsreihenfolge verbleibt, was sicherstellt, dass dieser Master 11 nun Zugriff auf den PCI-Bus 10 erhält, siehe Fig. 5.

Die Rückkehr zum Standard-Arbitrierverfahren findet statt, sobald der deterministische Master 11 mindestens eine Datentransaktion erfolgreich durchgeführt hat.

Eine erfindungsgemäße Vorrichtung 1 zur Durchführung des genannten Verfahrens umfasst bei der in der Fig. 2 gezeigten Ausführungsform eine Einrichtung 2 zur Festlegung der Zuteilungsreihenfolge auf den PCI-Bus entsprechend vorbestimmten Zuteilungsprioritäten für die einzelnen Master, eine Zeitermittlungseinrichtung 3 zur Ermittlung des Ablaufs einer vorbestimmten Zeitspanne, eine Ausgabeeinrichtung 4 zur Ausgabe eines Zeitablaufsignals, falls ein deterministischer Master bis zum Ablauf der in der Zeitermittlungseinrichtung ermittelten Zeitspanne den PCI-Bus nicht zugeteilt bekommen hat oder falls kein Datenaustausch erfolgte, und eine Änderungseinrichtung 5, die dafür sorgt, dass der deterministische Master in der Zuteilungsreihenfolge mit einer größeren Häufigkeit auftritt als die, die durch die Einrichtung zur Festlegung der Zuteilungsreihenfolge auf den PCI-Bus festgelegt wurde. Wie bereits zuvor erläutert, geschieht dies bei einer vorteilhaften Ausführungsform dadurch, dass diejenigen Master aus dem Arbitrierverfahren ausgeschlossen werden, welche keine Aktion auf das vom deterministischen Master adressierte Target ausstehen haben, die eine so genannte Deadlock-Situation erzeugen kann. Dadurch wird dafür Sorge getragen, dass die Häufigkeit der Zuteilungsreihenfolge des deterministischen Masters in absehbarer Zeit auf 100 % erhöht wird (siehe Fig. 4 und 5).

## Patentansprüche

1. Verfahren zur Zuteilung eines PCI-Busses an mehrere Master für Zugriffe der Master über den PCI-Bus auf an den PCI-Bus angeschlossene Targets, wobei die Master über den PCI-Bus Lese- und Schreibaktionen auf die Targets durchführen, bei dem
a) ein Standard-Arbitrierverfahren durchgeführt wird, in dem die Zuteilungsreihenfolge für eine Zuteilung des PCI-Busses entsprechend der jeweils für einen Master vorbestimmten Zuteilungspriorität festgelegt wird, und
b) ein Spezial-Arbitrierverfahren durchgeführt wird, falls ein deterministischer Master, der einen Request für eine Zuteilung des PCI-Busses gestellt hat, bis zum Ablauf einer vorbestimmten Zeitspanne den PCI-Bus nicht zugeteilt bekommen hat oder falls zum Ablauf der vorbestimmten Zeitspanne kein Datenaustausch zwischen dem deterministischen Master und dem adressierten Target stattgefunden hat, wobei in dem Spezial-Arbitrierverfahren dafür gesorgt wird, dass dieser deterministische Master in der Zuteilungsreihenfolge mit einer größeren Häufigkeit auftritt als im Standard-Arbitrierverfahren.

2. Verfahren nach Anspruch 1, **dadurch gekennzeichnet, dass** in dem Spezial-Arbitrierverfahren der deterministische Master die höchste Zuteilungspriorität für den PCI-Bus für einen Zugriff auf ein Target über den PCI-Bus erhält oder nur noch diejenigen Master in der Zuteilungsreihenfolge verbleiben, die eine Aktion auf das vom deterministischen Master adressierte Target ausstehen haben, die eine so genannte Deadlock-Situation erzeugen kann.

3. Verfahren nach Anspruch 1 oder 2, **dadurch gekennzeichnet, dass** die vorbestimmte Zeitspanne gemäß Schritt b) veränderbar ist.

4. Verfahren nach einem oder mehreren der vorangegangenen Ansprüche, **dadurch gekennzeichnet, dass** zur Ermittlung der vorbestimmten Zeitspanne eine vorbestimmte Anzahl von PCI-Bustakten gezählt wird.

5. Verfahren nach einem oder mehreren der vorangegangenen Ansprüche, **dadurch gekennzeichnet, dass** eine Reihenfolge für diejenigen Master vorgegeben wird, denen die gleiche Zuteilungspriorität zugewiesen wurde.

6. Verfahren nach einem oder mehreren der vorangegangenen Ansprüche, **dadurch gekennzeichnet, dass** durch die jeweilige vorbestimmte Zuteilungspriorität eines Masters festgelegt wird, wie oft der entsprechende Master in der Zuteilungsreihenfolge auftaucht.

7. Vorrichtung zur Zuteilung eines PCI-Busses an mehrere Master für Zugriffe der Master über den PCI-Bus auf an den PCI-Bus angeschlossene Targets, wobei die Master über den PCI-Bus Lese- und Schreibaktionen auf die Targets durchführen, mit
- einer Einrichtung (2) zur Festlegung der Zuteilungsreihenfolge für den PCI-Bus entsprechend vorbestimmten Zuteilungsprioritäten für die einzelnen Master,
- einer Zeitermittlungseinrichtung (3) zur Ermittlung des Ablaufs einer vorbestimmten Zeitspanne,
- einer Ausgabeeinrichtung (4) zur Ausgabe eines Zeitablaufsignals, falls ein deterministischer Master bis zum Ablauf der in der Zeitermittlungseinrichtung (3) ermittelten Zeitspanne den PCI-Bus nicht zugeteilt bekommen hat oder falls kein Datenaustausch zwischen dem deterministischen Master und dem adressierten Target erfolgte, und
- einer Änderungseinrichtung (5), die dafür sorgt, dass der deterministische Master in der Zuteilungsreihenfolge mit einer größeren Häufigkeit auftritt, als durch die Einrichtung (2) zur Festlegung der Zuteilungsreihenfolge für den PCI-Bus festgelegt.

8. Vorrichtung nach Anspruch 7, **dadurch gekennzeichnet, dass** die Änderungseinrichtung (5) so ausgebildet ist, dass sie dem deterministischen Master nach Erhalt des Zeitablaufsignals die höchste Priorität für eine Zuteilung des PCI-Busses zuweist und diejenigen Master, die keine Aktion auf das vom deterministischen Master adressierte Target ausstehen haben, die eine so genannte Deadlock-Situation erzeugen kann, aus der Zuteilungsreihenfolge entfernt.

9. Vorrichtung nach Anspruch 7 oder 8, **dadurch gekennzeichnet, dass** die vorbestimmte Zeitspanne von einem Bediener eingebbar ist.

10. Vorrichtung nach einem der Ansprüche 7 bis 9, **dadurch gekennzeichnet, dass** die Zeitermittlungseinrichtung (3) eine Zähleinrichtung umfasst, die zur Ermittlung der vorbestimmten Zeitspanne eine vorbestimmte Anzahl von PCI-Bustakten zählt.

11. Vorrichtung nach einem oder mehreren der Ansprüche 7 bis 10, **dadurch gekennzeichnet, dass** die Einrichtung (2) zur Festlegung der Zuteilungsreihenfolge so ausgebildet ist, dass die Reihenfolge von Mastern vorgebbar ist, denen die gleiche Zuteilungspriorität zugewiesen ist.

12. Vorrichtung nach einem oder mehreren der Ansprüche 9 bis 11, **dadurch gekennzeichnet, dass** durch die jeweilige vorbestimmte Zuteilungspriorität eines Masters festlegbar ist, wie oft der entsprechende Master in der Zuteilungsreihenfolge auftaucht.

13. Vorrichtung nach einem oder mehreren der Ansprüche 7 bis 12, **dadurch gekennzeichnet, dass** die Vorrichtung (1) an- und ausschaltbar ist.

14. Vorrichtung nach einem oder mehreren der Ansprüche 7 bis 13, **dadurch gekennzeichnet, dass** die Vorrichtung (1) in einem Sprachprozessor realisiert ist.
